# EUROPÄISCHE PATENTSCHRIFT

(11) **EP 2 290 303 B1**
(45) Veröffentlichungstag und Bekanntmachung des Hinweises auf die Patenterteilung: **05.06.2013**
(21) Anmeldenummer: 10154879.0
(22) Anmeldetag: 26.02.2010
(51) Int. Cl.: F24J 2/52

(54) **Montagesystem für Solarmodule**
Mounting system for solar modules
Système de montage pour module solaire

(30) Priorität: 25.08.2009 DE 202009011549 U
(43) Veröffentlichungstag der Anmeldung: 02.03.2011
(73) Patentinhaber: Fleck, Olaf, 91325 Adelsdorf (DE)
(72) Erfinder: Fleck, Olaf, 91325 Adelsdorf (DE)
(74) Vertreter: Hofstetter, Schurack & Partner

(56) Entgegenhaltungen:
- EP-A2- 2 090 847
- DE-U1-202004 015 261
- DE-U1-202005 015 455
- DE-U1-202009 012 870

## Beschreibung

Die vorliegende Erfindung betrifft ein Montagesystem zum Befestigen eines Solarmoduls auf einem Träger mit einer Schiene, auf die ein elastisches Pufferband aufgebracht ist, welches als lineare Auflage für das Solarmodul dient, und einer Klemme, die einen ersten und einen dazu senkrechten zweiten Schenkel besitzt. Der erste Schenkel ist in einem Befestigungszustand der Klemme auf der Schiene unmittelbar und senkrecht auf der Schiene befestigt, so dass der zweite Schenkel parallel zu der Schiene verläuft. Weiterhin weist der zweite Schenkel der Klemme an seiner im Befestigungszustand zur Schiene gewandten Seite ein im Querschnitt L-förmiges Pufferelement auf.

Solarmodule werden vielfach umgerahmt hergestellt und verbaut. Sie besitzen in dieser Bauweise plattenförmige Gestalt und sind meist als Laminat ausgebildet. Ein derartiges Laminat ist verhältnismäßig bruchempfindlich.

Solarmodule werden typischer Weise auf Dächern mit geeigneten Klemmen montiert. Diesbezüglich sei beispielsweise auf die Gebrauchsmusterschrift DE 20 2005 015 455 U1 verwiesen. Dort sind Tragleisten zur Stützung der Solarmodule vorgesehen, die als Profilelemente ausgebildet sind. Die Klemmelemente werden auf die Tragleisten aufgeschraubt und dienen zum Festklemmen der Solarmodule. Zwischen einem der Solarmodule einerseits und einem Klemmelement oder einem L-förmigen Abschnitt einer Seitenwand einer Tragleiste andererseits sind elastische Pufferelemente eingelegt, durch welche das Solarmodul vor Beschädigungen geschützt wird. Die Pufferelemente werden beispielsweise aus einem Gummimaterial hergestellt. Bei derartigen Konstruktionen ist es jedoch notwendig, dass Drehmomentschlüssel zur Befestigung der Schrauben der Klemmelemente verwendet werden. Andernfalls erhöht sich die Gefahr des Bruchs der eingeklemmten Solarmodule.

Eine Lösung des genannten Problems ergibt sich aus der Gebrauchsmusterschrift DE 20 2004 015 261 U1. Dort ist ein Montagesystem mit einem Grundprofil, auf welchem sich die Solarmodule mit ihrer Unterseite abstützen, sowie einem auf der Oberseite der Solarmodule angeordneten Deckprofil, welches über Verbindungsmittel mit dem Grundprofil zusammenwirkt, offenbart. Die Solarmodule werden in ihren Randbereichen zwischen das Deckprofil und das Grundprofil geklemmt. Zur Vermeidung einer Überbeanspruchung und Beschädigung der Solarmodule im Falle des zu festen Anziehens der Schraube eines Deckprofils, ist die Länge von Stützstegen des Deckprofils auf die Dicke des Solarmoduls und der L-förmigen Dichtung abgestimmt. Die L-förmige Dichtung gewährleistet einen gleichmäßigen Abstand zwischen den Stirnseiten der Solarmodule und den Stützstegen. Nachteilig hierbei ist jedoch, dass bei der Montage der Solarmodule, die typischer Weise in gekippter Stellung unter die Klemme geschoben werden, ein Anstoßen der Solarmodulkante an die Stützstege nicht ausgeschlossen werden kann. Bei einem solchen Anstoßen besteht wiederum erhöhte Gefahr des Bruchs des Solarmoduls.

Die Aufgabe der vorliegenden Erfindung besteht somit darin, ein Montagesystem zur Befestigung eines Solarmoduls bereitzustellen, bei dem die Gefahr des Bruchs eines Solarmoduls bei der Montage weiter verringert wird.

Erfindungsgemäß wird diese Aufgabe gelöst durch ein Montagesystem zum Befestigen eines Solarmoduls auf einem Träger mit
- einer Schiene, auf die eine elastisches Pufferband aufgebracht ist, welches als lineare Auflage für das Solarmodul dient,
- einer Klemme, die einen ersten und einen dazu senkrechten zweiten Schenkel besitzt, zum Festklammern des Solarmoduls an der Schiene, wobei
- der erste Schenkel in einem Befestigungszustand der Klemme auf der Schiene unmittelbar und senkrecht auf der Schiene befestigt ist, so dass der zweite Schenkel parallel zu der Schiene verläuft, und wobei
- der zweite Schenkel der Klemme an seiner im Befestigungszustand zur Schiene gewandten Seite ein im Querschnitt L-förmiges Pufferelement aufweist; und wobei ferner
- sich das Pufferelement entlang des ersten Schenkels der Klemme im Wesentlichen vollständig von der Schiene bis zum zweiten Schenkel erstreckt und
- das elastische Pufferband sich unter dem zweiten Schenkel der Klemme bis zum Pufferelement am ersten Schenkel erstreckt.

In vorteilhafter Weise ist mit dem L-förmigen Pufferelement und dem Pufferband gewährleistet, dass der Rand des Solarmoduls im Bereich der Klemme vollkommen durch das Puffermaterial bzw. die Puffermaterialien geschützt ist. Außerdem wird die Klemmkraft ausschließlich durch die Stärke des Pufferbands und des Pufferelements bestimmt. Damit ist die Gefahr des Bruchs beim Festschrauben der Klemme und die Gefahr des Bruchs beim Einschieben eines Solarmoduls unter die Klemme größtenteils beseitigt.

Vorzugsweise sind die Schiene und/oder die Klemme jeweils ein Aluminiumprofil. Derartige Aluminiumprofile sind leicht, stabil und kostengünstig herzustellen.

Darüber hinaus ist es von Vorteil, wenn das Pufferelement und/oder das Pufferband jeweils aus einem Elastomer, insbesondere aus Gummi, hergestellt sind. Ein wesentlicher Aspekt ist, dass das Pufferelement (deutlich) elastischer als die Schiene ist, so dass es entsprechende dämpfende Wirkung ausüben kann.

Ferner kann das Pufferelement und/oder das Pufferband formschlüssig in eine Nut der Schiene bzw. der Klemme eingedrückt sein. Dadurch lässt sich das Pufferelement bzw. das Pufferband sehr einfach an der Schiene bzw. an der Klemme befestigen.

Darüber hinaus kann die Klemme auf die Schiene aufschraubbar sein. Die Schraubverbindung stellt eine äußerst zuverlässige Verbindungsart dar.

Ferner kann die Klemme einen dritten Schenkel aufweisen, der sich ebenfalls im Wesentlich senkrecht zum ersten Schenkel erstreckt, gegenüber dem zweiten Schenkel angeordnet ist und zur Befestigung eines zweiten Solarmoduls dient. Damit lässt sich in einfacher Weise ein Solarfeld mit mehreren Modulen aufbauen.

Weiterhin ist es vorteilhaft, wenn das Pufferelement in dem Befestigungszustand der Klemme bündig mit der Klemme auf der Schiene aufliegt. Damit ist sichergestellt, dass sich das Pufferelement über die gesamte Länge des ersten Schenkels erstreckt, so dass eine Beschädigung des Solarmoduls beim Einschieben unter eine Klemme verhindert werden kann.

Des Weiteren ist es von Vorteil, wenn das Pufferelement mit dem Pufferband in dem Befestigungszustand der Klemme auf der Schiene im Querschnitt eine vollständige U-Form bildet. Auf diese Weise lässt sich vermeiden, dass das Solarmodul mit seiner Kante an ein Metallteil der Schiene bzw. der Klemme stößt.

Die vorliegende Erfindung wird nun anhand der beigefügten Zeichnungen näher erläutert, in denen zeigen:
- Fig. 1: eine Anordnung von zwei Solarmodulen, die mit dem erfindungsgemäßen Montagesystem befestigt sind;
- Fig. 2: einen Querschnitt durch einen Teil der Anordnung von Fig. 1 und
- Fig. 3: einen Querschnitt durch eine Schiene zur Auflage eines Solarmoduls.

Die nachfolgenden näher geschilderten Ausführungsbeispiele stellen bevorzugte Ausführungsformen der vorliegenden Erfindung dar.

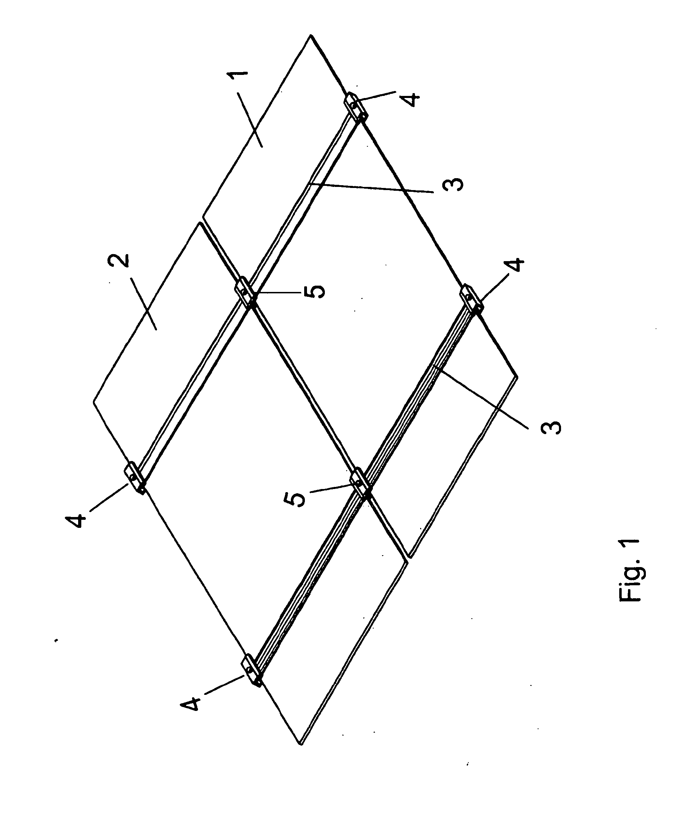

In dem in Fig. 1 dargestellten Beispiel sind zwei Solarmodule 1, 2 parallel nebeneinander montiert. Jedes der Solarmodule 1, 2 ist plattenförmig und besitzt hier rechteckförmige Gestalt. Die Solarmodule 1, 2 sind rahmenlos und werden vielfach auch als "Laminat" bezeichnet. Sie bestehen meist aus Schichten von Glasträgern und den eigentlichen Solarzellen. Da sie rahmenlos sind, können sie leicht an ihren Rändern beschädigt werden.

Die beiden Solarmodule 1, 2 sind hier durchsichtig dargestellt, so dass die Schienen 3, auf denen sie aufliegen, auch in der dargestellten Draufsicht von schräg oben erkennbar sind. Die Schienen 3 stellen lineare Auflagen dar. Dadurch können sich nur eindimensionale Spannungsbilder quer zu den Schienen 3 ergeben. Dies erweist sich als deutlicher Vorteil gegenüber punktuellen Auflagen, wie sie aus dem Stand der Technik bekannt sind. Derartige punktuelle Auflage, die sich in der Regal am Rand eines Solarmoduls befinden, lassen ein zweidimensionales Spannungsbild zu, was sich hinsichtlich der mechanischen Stabilität als ungünstig herausstellt.

Im Bereich der Modulränder sind auf die Schienen 3 Klemmen 4 und 5 aufgeschraubt. Am Rand des Solarfelds befinden sich Einseitenklemmen 4, die lediglich ein Solarmodul festhalten. Zwischen den beiden Solarmodulen 1, 2 befinden sich Zweiseitenklemmen 5, die an beiden Seiten jeweils ein Solarmodul festklemmen. Durch die Zweiseitenklemmen 5 müssen nicht zwei einzelne Einseitenklemmen 4 zwischen zwei Solarmodulen bereitgestellt und montiert werden. Die Zweiseitenklemmen 5 dienen außerdem als Abstandshalter zwischen den beiden Solarmodulen 1, 2 und gewährleisten einen gleichmäßigen Abstand der gegenüberliegenden Modulränder. Ein Solarfeld kann somit aus einer beliebigen Anzahl an Solarmodulen bestehen, wobei die Einseitenklemmen 4 jeweils nur am Rand des Solarfelds und die Zweiseitenklemmen 5 jeweils zwischen zwei Solarmodulen zum Drücken der jeweiligen Solarmodule auf die Schienen 3 dienen.

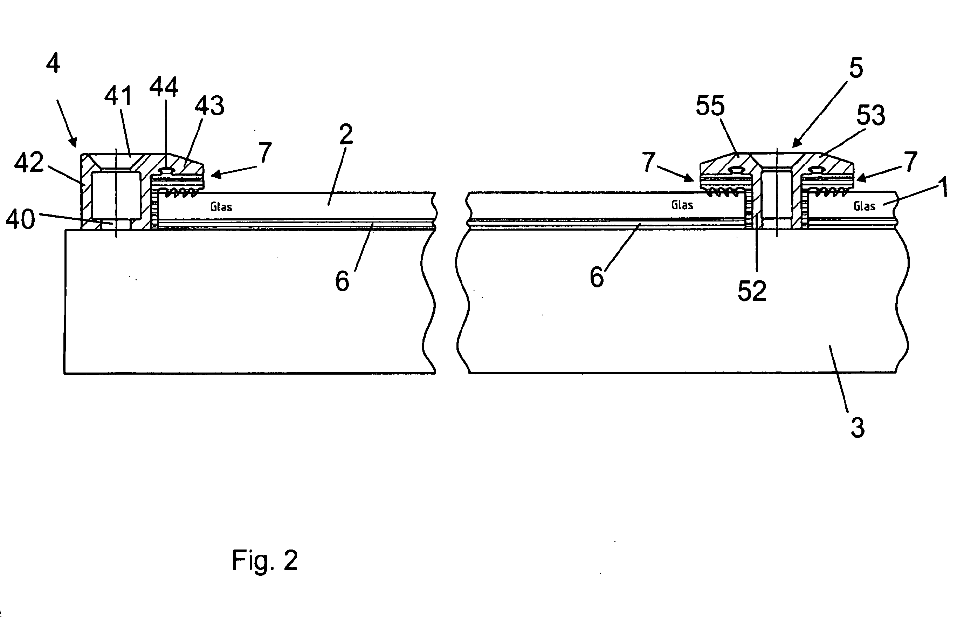

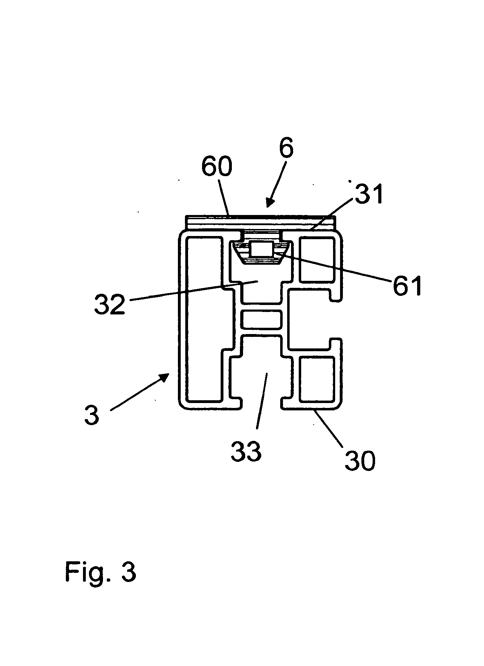

Fig. 2 gibt nun einen Schnitt durch die Solarmodulanordnung von Fig. 1 entlang einer Schiene 3 wieder. Die stabförmige Schiene 3 ist beispielsweise als Hohlprofil ausgebildet. Einen Querschnitt durch dieses Hohlprofil zeigt Fig. 3. Das Hohlprofil besitzt hier eine Unterseite 30 und eine Oberseite 31. Beide weisen jeweils eine Nut 32, 33 auf, welche sich in Längsrichtung der Schiene 3 erstrecken. In die untere Nut 33 kann beispielsweise eine Schraube oder eine Mutter formschlüssig eingebracht werden, um die Schiene 3 beispielsweise auf einem Dach zu befestigen. Eine Hinterschneidung der Nut sorgt dafür, dass die Schraube bzw. Mutter (in Fig. 3 nicht dargestellt) nicht aus dem Hohlprofil senkrecht zur Längserstreckung der Schiene 3 entnommen werden kann.

Die obere Nut 32 an der Oberseite 31 der Schiene 3 weist ebenfalls eine Hinterschneidung auf, so dass ein extrudiertes Gummiband formschlüssig in die Nut 32 eingebracht werden kann. Das Gummiband 6 stellt ein elastisches Pufferband dar, und kann auch aus einem anderen Elastomer hergestellt sein. Es verhindert, dass ein Solarmodul direkt mit der metallenen Oberseite 31 der Schiene 3 in Berührung gerät. Durch seine Pufferwirkung verhindert es somit Beschädigungen oder Zerstörungen von Solarmodulen. Das Gummiband 6 besteht hier aus der eigentlichen Gummiauflage 60, die in etwa die Breite der Schiene 3 besitzt. An ihrer Unterseite besitzt die Gummiauflage 60 eine schwalbenschwanzförmige Anformung 61, die zur Befestigung der Gummiauflage 60 an der Schiene 3 dient. Die Schwalbenschwanzform ermöglicht zum einen, dass die Anformung in die Nut 32 gedrückt werden kann. Zum anderen gewährleistet sie, dass sie mit ihrer breitesten Stelle Hinterschneidungen der Nut 32 hintergreift. Dadurch ist ein Formschluss realisiert, der das Gummiband 6 zuverlässig auf der Schiene 3 hält. Alternativ kann ein Gummiband 6 aber auch auf einer Schiene 3 aufgeklebt oder anderweitig befestigt werden.

In dem Beispiel von Fig. 2 ist am linken Rand eine Einseitenklemme 4 auf die Schiene 3 mit einer Senkkopfschraube aufgeschraubt. Dazu weist die Einseitenklemme 4 eine Bohrung 40 mit Senkkopfabschnitt 41 auf. Die Senkkopfschrauben (in Fig. 2 nicht dargestellt) haben den Vorteil, dass sie in die jeweilige Klemme eingesenkt sind und somit auf die Solarmodule 1, 2 keinen eigenen Schatten werfen.

Die Einseitenklemme 4 besitzt im Wesentlichen eine L-förmige Grundstruktur mit zwei senkrecht aufeinander stehenden Schenkeln. Der erste Schenkel 42 verläuft im aufgeschraubten Zustand der Einseitenklemme 4 senkrecht zu der Längsrichtung der Schiene 3. Der zu dem ersten Schenkel 42 senkrechte zweite Schenkel 43 erstreckt sich in dem Querschnitt von Fig. 2 parallel zu der Längsrichtung der Schiene 3. In Richtung auf sein freies Ende hin ist der zweite Schenkel 43 etwas abgeflacht, um seinen Schattenwurf auf die Solarmodule 1, 2 zu verkleinern. Typischerweise ist die Einseitenklemme 4 als mehrere cm messendes Hohlstrangprofil aus Aluminium ausgebildet. An der Seite des ersten Schenkels 42, die zu dem Solarmodul 2 gewandt ist und ebenso an derjenigen Seite des zweiten Schenkels 43, die auch zu dem Solarmodul 2 gewandt ist, liegt ein im Querschnitt L-förmiges Pufferelement 7 an. Das Pufferelement 7 besteht vorzugsweise ebenfalls aus Gummi oder einem anderen Elastomer. Es erstreckt sich vollständig entlang des ersten Schenkels 42 der Einseitenklemme 4. Ebenso erstreckt es sich in der Längsrichtung der Schiene 3 über die gesamte Länge des zweiten Schenkels 43. Seine Erstreckung senkrecht zu der Zeichenebene von Fig. 2 entspricht derjenigen der Einseitenklemme 4.

Der zweite Schenkel 43 der Einseitenklemme 4 besitzt entlang der Strangrichtung eine Nut 44 mit Hinterschneidung. In sie ist eine Anformung an das Pufferelement 7 eingedrückt, wodurch sich eine formschlüssige Verbindung zwischen dem Pufferelement 7 und der Einseitenklemme 4 ähnlich wie dem Gummiband 6 auf der Schiene 3 ergibt. An dem mit dem zweiten Schenkel 43 korrespondierenden Schenkel besitzt das Pufferelement 7 zahnartige Fortsätze, die in Richtung auf das Solarmodul 2 gerichtet sind. Mit Ihnen lässt sich der Klemmdruck auf das Solarmodul definierter einstellen. Je nach Materialstärke und/oder Material des Pufferelements 7 lässt sich der Druck auf das Solarmodul 2 variieren. Für dickere Laminate bzw. Solarmodule können bei gleicher Klemme 4 dünnere Pufferelemente 7 und bei dünneren Laminaten entsprechend dickere Pufferelemente 7 eingesetzt werden. Die Klemmkraft wird somit über die Materialstärke der Pufferelemente 7 bzw. der Pufferbänder 6 gesteuert, zwischen denen die Solarmodule eingeklemmt werden. Da die Einseitenklemme 4 unmittelbar auf die Schiene 3 ohne Zwischenschaltung eines Gummibands oder anderen Gummiteils aufgeschraubt ist, ist der Abstand zwischen dem zweiten Schenkel 43 der Einseitenklemme 4 und der Schiene 3 bei vorgegebener Geometrie der Einseitenklemme 4 unabhängig von der Anzugskraft der Klemmenschraube eindeutig festgelegt. Das Puffer- bzw. Gummiband 6 endet unmittelbar an dem Schenkel des Pufferelements 7, welcher parallel mit dem ersten Schenkel 42 der Einseitenklemme 4 und damit senkrecht zu der Längsrichtung der Schiene 3 verläuft. Hierdurch ist gewährleistet, dass das Solarmodul 2 am Rand im Bereich der Einseitenklemme 4 vollständig mit Puffer- bzw. Gummimaterial umgeben ist. Hierdurch kann ein umfassender Schutz des Solarmoduls 2 gegenüber Stößen an Metallteile gewährleistet werden.

Die in Fig. 2 dargestellte Doppelseitenklemme 5 besitzt im Querschnitt im Wesentlichen T-förmige Gestalt. Sie besitzt auf der Seite die gleiche Klemmfunktion und auf einer Seite den gleichen Aufbau wie die Einseitenklemme 4. Das heißt sie besitzt einen ersten Schenkel 52 senkrecht zu der Längsrichtung der Schiene 3 und einen zweiten Schenkel 53, der seinerseits senkrecht zu dem ersten Schenkel 52 steht. Ein dritter Schenkel 55 erstreckt sich symmetrisch zu dem zweiten Schenkel 53, so dass sich mit dem ersten Schenkel 52 im Querschnitt der Zweiseitenklemme eine T-Form ergibt. Pufferelemente 7 sind an beiden Schenkel 53 analog zu dem Pufferelement 7 am zweiten Schenkel 43 der Einseitenklemme 4 befestigt. Mit der Zweiseitenklemme 5 können somit gleichzeitig das Solarmodul 1 wie auch das Solarmodul 2 auf die Schiene 3 bzw. deren Pufferband 6 geklemmt werden.

Dadurch, dass der Druck auf die Solarmodule nicht durch das Anzugsdrehmoment der Klemmenschrauben bestimmt ist, ist es nicht notwendig, dass die Klemme mit Drehmomentschlüsseln auf den Schienen 3 montiert werden. Dies erleichtert die Montagearbeiten auf Dächern deutlich.

Auch die Zweiseitenklemme 5 kann als Aluminiumhohlstrangprofil realisiert sein. In Strangrichtung erstreckt sich die Einseitenklemme 4 wie auch die Zweiseitenklemme 5 etwas mehr als die Breite einer Schiene 3.

## Patentansprüche

1. Montagesystem zum Befestigen eines Solarmoduls (1, 2) auf einem Träger mit
- einer Schiene (3), auf die ein elastisches Pufferband (6) aufgebracht ist, welches als lineare Auflage für das Solarmodul (1, 2) dient,
- einer Klemme (4, 5), die einen ersten (42, 52) und einen dazu senkrechten zweiten Schenkel (43, 53) besitzt, zum Festklemmen des Solarmoduls (1, 2) an der Schiene (3), wobei
- der erste Schenkel (42, 52) in einem Befestigungszustand der Klemme (4, 5) auf der Schiene (3) unmittelbar und senkrecht befestigt ist, so dass der zweite Schenkel (43, 53) parallel zu der Schiene verläuft, und wobei
- der zweite Schenkel (43, 53) der Klemme (4, 5) an seiner im Befestigungszustand zur Schiene (3) gewandten Seite ein im Querschnitt L-förmiges Pufferelement (7) aufweist,
**dadurch gekennzeichnet, dass**
- sich das Pufferelement (7) entlang des ersten Schenkels (42, 52) der Klemme (4, 5) im Wesentlichen vollständig von der Schiene (3) bis zum zweiten Schenkel (43, 53) erstreckt und
- das elastische Pufferband (6) sich unter dem zweiten Schenkel (43, 53) der Klemme (4, 5) bis zum Pufferelement (7) am ersten Schenkel (42, 52) erstreckt.

2. Montagesystem nach Anspruch 1,
wobei die Schiene (3) und/oder die Klemme (4, 5) jeweils ein Aluminiumprofil sind.

3. Montagesystem nach Anspruch 1 oder 2,
wobei das Pufferelement (7) und/oder das Pufferband (6) jeweils aus einem Elastomer, insbesondere aus Gummi, hergestellt sind.

4. Montagesystem nach einem der vorhergehenden Ansprüche,
wobei das Pufferelement (7) und/oder das Pufferband (6) formschlüssig in eine Nut (32, 44) der Schiene (3) bzw. der Klemme (4, 5) eingedrückt sind.

5. Montagesystem nach einem der vorhergehenden Ansprüche,
wobei die Klemme (4, 5) auf die Schiene (3) aufschraubbar ist.

6. Montagesystem nach einem der vorhergehenden Ansprüche,
wobei die Klemme (4, 5) einen dritten Schenkel (55) aufweist, der sich ebenfalls im Wesentlichen senkrecht zu dem ersten Schenkel (42, 52) erstreckt, gegenüber dem zweiten Schenkel (43, 53) angeordnet ist und zur Befestigung eines zweiten Solarmoduls dient.

7. Montagesystem nach einem der vorhergehenden Ansprüche,
wobei das Pufferelement (7) in dem Befestigungszustand der Klemme (4, 5) bündig mit der Klemme (4, 5) auf der Schiene (3) aufliegt.

8. Montagesystem nach einem der vorhergehenden Ansprüche,
wobei das Pufferelement (7) mit dem Pufferband (6) in dem Befestigungszustand der Klemme (4, 5) auf der Schiene (3) im Querschnitt eine vollständige U-Form bildet.

## Claims

1. Assembly system for attaching a solar module (1, 2) to a support including
- a rail (3), on which an elastic buffer band (6) is applied, which serves as a linear rest for the solar module (1, 2),
- a clamp (4, 5) having a first (42, 52) and a second leg (43, 53) perpendicular thereto, for clamping the solar module (1, 2) to the rail (3), wherein
- the first leg (42, 52) is immediately and perpendicularly attached on the rail (3) in an attachment state of the clamp (4, 5), such that the second leg (43, 53) extends parallel to the rail, and wherein
- the second leg (43, 53) of the clamp (4, 5) has a buffer element (7) L-shaped in cross-section on its side facing the rail (3) in the attachment state, **characterized in that**
- the buffer element (7) extends along the first leg (42, 52) of the clamp (4, 5) substantially completely from the rail (3) up to the second leg (43, 53), and
- the elastic buffer band (6) extends below the second leg (43, 53) of the clamp (4, 5) up to the buffer element (7) on the first leg (42, 52).

2. Assembly system according to claim 1,
wherein the rail (3) and/or the clamp (4, 5) are each an aluminum profile.

3. Assembly system according to claim 1 or 2,
wherein the buffer element (7) and/or the buffer band (6) are each manufactured of an elastomer, in particular of rubber.

4. Assembly system according to anyone of the preceding claims,
wherein the buffer element (7) and/or the buffer band (6) are form-fit pressed into a groove (32, 44) of the rail (3) and of the clamp (4, 5), respectively.

5. Assembly system according to anyone of the preceding claims,
wherein the clamp (4, 5) can be screwed onto the rail (3).

6. Assembly system according to anyone of the preceding claims,
wherein the clamp (4, 5) has a third leg (55), which also extends substantially perpendicularly to the first leg (42, 52), is disposed opposing the second leg (43, 53) and serves for attaching a second solar module.

7. Assembly system according to anyone of the preceding claims,
wherein the buffer element (7) rests on the rail (3) flush with the clamp (4, 5) in the attachment state of the clamp (4, 5).

8. Assembly system according to anyone of the preceding claims,
wherein the buffer element (7) with the buffer band (6) in the attachment state of the clamp (4, 5) forms a complete U shape in cross-section on the rail (3).

## Revendications

1. Système de montage, destiné à fixer un panneau solaire (1, 2) sur un support, avec
- un rail (3), sur lequel est appliqué une bande tampon élastique (6), laquelle sert d'appui linéaire pour le panneau solaire (1, 2),
- une pince (4, 5), qui possède un premier (42, 52) et un deuxième montant (43, 53), vertical par rapport au premier, destinée à bloquer le panneau solaire (1, 2) sur le rail (3), moyennant quoi
- le premier montant (42, 52) est fixé, dans un état de fixation de la pince (4, 5), directement et verticalement, sur le rail (3), de sorte que le deuxième montant (43, 53) évolue parallèlement au rail et moyennant quoi
- le deuxième montant (43, 53) de la pince (4, 5) présente, sur son côté, tourné vers le rail (3), dans l'état de fixation, un élément tampon (7) en forme de L en coupe transversale,
**caractérisé en ce que**
- l'élément tampon (7) s'étend le long du premier montant (42, 52) de la pince (4, 5) essentiellement intégralement du rail (3) jusqu'au deuxième montant (43, 53) et
- la bande tampon élastique (6) s'étend sous le deuxième montant (43, 53) de la pince (4, 5), jusqu'à l'élément tampon (7), sur le premier montant (42, 52).

2. Système de montage selon la revendication 1, moyennant quoi le rail (3) et / ou la pince (4, 5) sont, respectivement, un profilé en aluminium.

3. Système de montage selon la revendication 1 ou 2, moyennant quoi l'élément tampon (7) et / ou la bande tampon (6) sont fabriqués, respectivement, dans un élastomère, en particulier en caoutchouc.

4. Système de montage selon l'une des revendications précédentes, moyennant quoi l'élément tampon (7) et / ou la bande tampon (6) sont enfoncés, par complémentarité de forme, dans une rainure (32, 44) du rail (3) ou de la pince (4, 5).

5. Système de montage selon l'une des revendications précédentes, moyennant quoi la pince (4, 5) peut être vissée sur le rail (3).

6. Système de montage selon l'une des revendications précédentes, moyennant quoi la pince (4, 5) présente un troisième montant (55), qui s'étend également, essentiellement, verticalement par rapport au premier montant (42, 52), est agencé face au deuxième montant (43, 53) et sert à fixer un second panneau solaire.

7. Système de montage selon l'une des revendications précédentes, moyennant quoi l'élément tampon (7) s'appuie, dans l'état de fixation de la pince (4, 5), de niveau avec la pince (4, 5), sur le rail (3).

8. Système de montage selon l'une des revendications précédentes, moyennant quoi l'élément tampon (7), avec la bande tampon (6), représente, dans l'état de fixation de la pince (4, 5) une forme de U complète, en coupe transversale, sur le rail (3).
